# EUROPÄISCHE PATENTSCHRIFT

(11) **EP 3 479 041 B1**
(45) Veröffentlichungstag und Bekanntmachung des Hinweises auf die Patenterteilung: **03.06.2020**
(21) Anmeldenummer: 16734291.4
(22) Anmeldetag: 29.06.2016
(51) Int. Cl.: F26B 25/00

(54) **KONTINUIERLICHER MEHRKAMMERPROZESS**
CONTINUOUS MULTI-CHAMBER PROCESS
PROCESSUS CONTINU À PLUSIEURS CHAMBRES

(43) Veröffentlichungstag der Anmeldung: 08.05.2019
(73) Patentinhaber: Lehmann, Markus, 5610 Wohlen (CH)
(72) Erfinder: Lehmann, Markus, 5610 Wohlen (CH)
(74) Vertreter: Schneider Feldmann AG Patent- und Markenanwälte
(86) Internationale Anmeldenummer: PCT/EP2016/065123
(87) Internationale Veröffentlichungsnummer: WO 2017/001465

(56) Entgegenhaltungen:
- DE-A1- 10 148 721
- US-A- 2 174 066

## Beschreibung

Die Erfindung betrifft eine Anlage zur Durchführung eines kontinuierlichen, mehrstufigen Industrieprozesses, umfassend mindestens einen ersten Raum und einen zweiten Raum, wobei in diesen Räumen während des Prozessverlaufs verschiedene Prozessbedingungen und insbesondere verschiedene Drucke vorherrschen, wobei diese zwei Räume durch einen ersten Verbindungskanal miteinander verbunden sind; und wobei ein Prozessgut bei einem Prozessablauf den ersten Raum, den ersten Verbindungskanal und den zweiten Raum nacheinander durchläuft. Die Erfindung betrifft auch ein kontinuierliches Industrieprozess, das auf einer solchen Anlage ausführbar ist. Eine derartige Anlage und ein derartiges Industrieprozess sind aus der US2174066 bekannt.

### Stand der Technik

Anlagen zur Durchführung von Industrieprozessen sind bekannt, allerdings verfügen sie in der Regel über Ventile, Klappen und/oder Schleusen, welche für die Aufrechterhaltung der verschiedenen Prozessbedingungen in den einzelnen Prozessräumen verantwortlich sind. Nachteilig daran ist, dass solche Prozesse meist nicht kontinuierlich ausgeführt werden können, sondern in sogenannten Batches.

In verschiedenen Prozessräumen kontinuierlich ausgeführte Industrieprozesse, bei denen das Prozessgut schütt- oder rieselfähig ist, lassen in der Regel keine unterschiedlichen Prozessbedingungen zu, wie beispielsweise hohe Druck- oder Temperaturunterschiede.

Ein Beispiel ist in der WO2008122137 A1 gegeben, welches pastöses Nassmaterial, insbesondere Schlamm, in einem Trocknungsverfahren trocknet, indem das Nassmaterial einem Trocknungsverfahren unterzogen wird. Dieses Verfahren wird in einem Trocknungsbehälter ausgeführt, in dem optimierte Druck- und Temperaturverhältnisse vorherrschen. Sobald das Nassmaterial einen gewünschten Trocknungsgrad erreicht hat, wird eine Schleuse geöffnet und das Trockenmaterial kann entnommen werden. Anschliessend wird mit einer Förderschnecke weiteres Nassmaterial in den Trocknungsbehälter eingebracht. Zur Verbesserung des Prozesses kann das Nassmaterial vorgängig mit einer Trockensubstanz gemischt und/oder vorgewärmt werden. Nachteilig an diesem Verfahren ist, dass der Prozess nicht stufenlos resp. schleusenfrei ausgeführt werden kann.

Aus der US2174006 ist ein kontinuierlicher Prozess zum Sintern oder Kalzinieren beschrieben, wobei das Prozessgut auf einem Fliessband verschiedene Räume durchläuft, in denen es beispielsweise erwärmt und später abgekühlt wird. Da die Kammern aber mehrheitlich aus Trennwänden bestehen, welche in einem genügend grossen Abstand zum Fliessband angeordnet sind, sind Einstellungen unterschiedlicher Druckverhältnisse in den Kammern nicht möglich.

Aus der DE10148721A1 ist ein Verfahren zum Herstellen von Elastomermischungen für die Gummiherstellung. Die dazu verwendeten Materialien sind Fluidmedien. Sie werden durch verschiedene Dosierwaagen nach Bedarf batchweise zugefügt.

### Beschreibung der Erfindung

Es ist daher die Aufgabe der vorliegenden Erfindung, eine eingangs beschriebene Anlage zu beschreiben, mit welcher ein stufenloser, kontinuierlich ausführbarer Industrieprozess ausgeführt werden kann. Zudem soll ein Industrieprozess beschrieben werden, das mit einer solchen Anlage stufenlos ausgeführt werden kann. Der in den Räumen vorherrschende, unterschiedliche Druck soll aufrecht erhalten bleiben können.

Diese Aufgaben werden durch die Merkmale der unabhängigen Patentansprüche gelöst. In den Unteransprüchen sind bevorzugte Ausführungsformen beschrieben. Erfindungsgemäss ist bei einer solchen Anlage ein Transportgut im ersten Verbindungskanal vorgesehen, in welchem oder mit welchem bei einem Prozessablauf das Prozessgut den ersten Verbindungskanal durchlaufen kann, wobei das Transportgut zusammen mit dem Prozessgut eine rieselfähige Dichtzone im Verbindungskanal bildet, welche die Aufrechterhaltung der unterschiedlichen Prozessbedingungen, insbesondere unterschiedlichen Drucke, in den beiden Räumen gewährleistet.

Entsprechend wird beim erfindungsgemässen Industrieprozess vorzugsweise kontinuierlich Prozessgut in den ersten Raum mit ersten Prozessbedingungen eingebracht, wo es einem ersten Prozess unterliegt, wobei das Prozessgut anschliessend in oder mit dem Transportgut den ersten Verbindungskanal durchläuft und in den zweiten Raum mit zweiten Prozessbedingungen gelangt, wo es einem zweiten Prozess unterliegt, aus dem es entnommen wird. Die zweiten Prozessbindungen im zweiten Raum unterscheiden sich mindestens durch den vorherrschenden Druck von den ersten Prozessbedingungen im ersten Raum.

Das Transportgut bildet erfindungsgemäss zusammen mit dem Prozessgut eine rieselfähige Dichtzone im Verbindungskanal, welche die Aufrechterhaltung der unterschiedlichen Prozessbedingungen, insbesondere die Druckunterschiede in den beiden Räumen gewährleistet.

Es hat sich gezeigt, dass ein rieselfähiges sowie ein rieselndes Gemisch von Prozessgut und Transportgut durchaus eine dichtende Zone im Verbindungskanal bilden kann, wenn der Verbindungskanal über eine ausreichend lange Strecke mit diesem Gemisch gefüllt ist. Der Verbindungskanal kann beispielsweise ein schräg oder senkrecht stehendes Rohr mit einer unteren, schmäleren Öffnung sein, aus dem das Gemisch stetig herausrieseln kann, während es kontinuierlich mit dem Gemisch wieder gefüllt wird, wobei der Füllstand des Rohres vorzugsweise innerhalb eines vorgegebenen Bereichs sein sollte. Dies kann einerseits mit der Befüllungsgeschwindigkeit und andererseits mit der Ausrieselgeschwindigkeit, welche beispielsweise durch die Querschnittsfläche der unteren Öffnung und/oder durch die Geometrie des Austrittsbereichs bestimmt werden kann, reguliert werden.

Erfindungsgemäss wird die Dichtzone im Mehrkammerprozess durch eine Labyrinth Dichtung erzeugt, da ein rieselndes Gemisch keine absolut gasdichte Dichtzone bilden kann und daher immer einen gewissen Gasaustausch zwischen den beiden Enden des Verbindungskanals zulässt. Die erforderliche Dichtigkeit wird durch eine entsprechend ausreichende Länge der Dichtzone erreicht, sodass die Prozessbedingungen in den beiden an den Verbindungskanälen angrenzenden Räumen, insbesondere deren Druckunterschied, in dem Mass aufrechterhalten bleiben, wie es die Prozesse in diesen Räumen verlangen.

### Kurze Beschreibung der Zeichnungen

In der Folge wird die Erfindung mit Bezug auf die Figuren näher beschrieben. Gleiche Bezugszahlen verweisen jeweils auf dieselben Sachverhalte, mit oder ohne ein Buchstabe a, b, c oder d. Es zeigen:
- Fig. 1: eine schematische Darstellung einer erfindungsgemässen Anlage mit zwei Räumen;
- Fig. 2: eine schematische Darstellung einer erfindungsgemässen Anlage mit vier Räumen;
- Fig. 3a: eine schematische Darstellung eines Verbindungskanals einer erfindungsgemässen Anlage zwischen zwei Räumen;
- Fig. 3b: eine alternative schematische Darstellung eines Verbindungskanals einer erfindungsgemässen Anlage zwischen zwei Räumen.

### Wege zur Ausführung der Erfindung

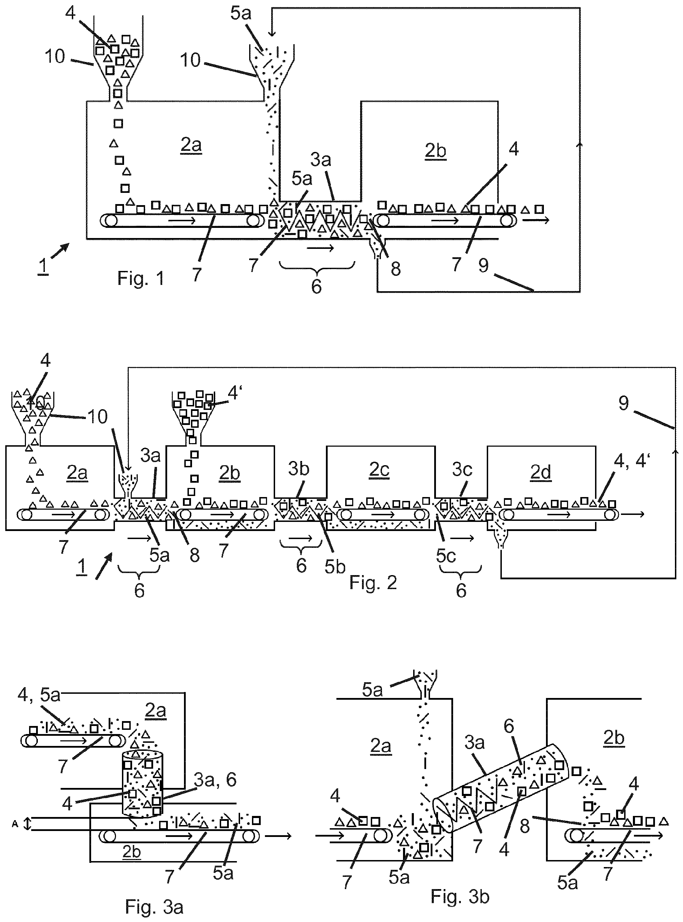

Fig. 1 zeigt eine erfindungsgemässe Anlage 1 zur Durchführung eines kontinuierlichen, mehrstufigen Industrieprozesses in einfachster Form. Sie umfasst einen ersten Raum 2a und einen zweiten Raum 2b, wobei in diesen Räumen 2a, 2b während des Prozessverlaufs verschiedene Prozessbedingungen vorherrschen, insbesondere Druckunterschiede. Dabei kann einer der Räume beispielsweise auch zur Umgebung offen sein. Diese zwei Räume 2a, 2b sind durch einen ersten Verbindungskanal 3a miteinander verbunden. Bei einem Prozessablauf kann ein Prozessgut 4 den ersten Raum 2a, den ersten Verbindungskanal 3a und den zweiten Raum 2b nacheinander durchlaufen. Erfindungsgemäss ist ein Transportgut 5a im ersten Verbindungskanal 3a vorgesehen, in welchem oder mit welchem bei einem Prozessablauf das Prozessgut 4 den ersten Verbindungskanal 3a durchlaufen kann. Das Transportgut 5a bildet zusammen mit dem Prozessgut 4 eine rieselfähige Dichtzone 6 im Verbindungskanal 3a, welche die Aufrechterhaltung der unterschiedlichen Prozessbedingungen, insbesondere die Druckunterschiede in den beiden Räumen 2a, 2b gewährleistet. Während dem Prozess rieselt dieses Gemisch aus Transportgut 5a und Prozessgut 4 stetig durch die Dichtzone hindurch.

Natürlich ist diese Erfindung nicht auf zwei Räume 2a, 2b mit einem Verbindungskanal 3a beschränkt. Somit können in manchen der Räume 2 auch Umgebungsbedingungen herrschen, die insbesondere auch offen sein können.

Die Prozessbedingungen in den beiden Räumen 2a, 2b können sich, abgesehen von den darin vorherrschenden Druckunterschieden, beispielsweise in deren Temperatur, deren Feuchtigkeitsgehalt, deren Gaszusammensetzung und/oder deren Strahlenbelastung unterscheiden.

Erfindungsgemäss ist der Durchgang der Anlage 1 zwischen den beiden Räumen 2a, 2b schleusenfrei, sodass ein kontinuierlicher Industrieprozess durchgeführt werden kann, bei dem nicht zwischendurch portioniert und somit der Prozess nicht unterbrochen werden muss. Das Prozessgut 4 kann kontinuierlich durch die Anlage 1 laufen, ohne zwischendurch anhalten zu müssen. Dies vereinfacht den Prozess, da Diskontinuitäten in einem Prozess oft für Störungen verantwortlich sind.

Insbesondere können ein oder mehrere Transportmittel 7 vorgesehen sein, welche den Durchlauf des Prozessguts 4 und allenfalls auch des Transportgutes 5a gewährleisten. Das Prozessgut 4 kann dabei mit diesen Transportmitteln 7 alleine oder vermengt mit dem Transportgut 5a transportiert werden. Als Transportmittel 7 können insbesondere eine Schnecke, ein Transportband, eine Rieselanlage und/oder eine Pumpe verwendet werden. Entscheidend ist dabei, dass rieselfähiges Gut transportiert werden kann.

Das Prozessgut 4 kann ein beliebiger Körper sein, der die Prozesse durchlaufen soll. Beispiele geeigneter Prozesse sind eine Trocknung, eine Befeuchtung, eine Kondensation, eine Destillation, ein Einfärben, ein Bespritzen, eine Bestrahlung, eine Erwärmung, eine Kühlung, eine Adsorption, eine Rezeption, und/oder eine Mischung oder Entmischung, eine Vereinzelung, sowie ein Einbringen in die Anlage 1 oder Ausbringen aus der Anlage 1, wenn in der Umgebung andere Prozessbedingungen, insbesondere andere Drucke vorherrschen als in den dazu benachbarten Räumen 2. Die Liste ist nicht abschliessend.

Das Prozessgut 4 kann aber auch ein Nassmaterial sein, das in einem Raum 2 mit einem trockenen Transportgut 5 vermischt wird, sodass es zusammen rieselfähig wird. Rieselfähig bedeutet im Zusammenhang mit der vorliegenden Erfindung, dass das Gemisch ein gasdurchlässiges Schüttgut ist, welches beim Schütten in Portionen aufgeteilt wird. Flüssigkeiten und pastöse Massen sind nicht gasdurchlässig und daher im Sinne der Erfindung nicht rieselfähig. Ein ursprünglich pastöses oder flüssiges Prozessgut 4 muss daher mit entsprechend viel trockenem Transportgut 5 vermengt werden, damit es rieselfähig wird. Andererseits kann ein trocknes Prozessgut 4 mit einem Transportgut 5a vermengt werden, das selbst ein Schüttgut, eine pastöse Masse oder eine Flüssigkeit ist. Wichtig ist wiederum, dass die Mischung von Prozessgut 4 und Transportgut 5 im Verbindungskanal 3a rieselfähig ist. Eine zu nasse Mischung würde den Transport durch den Verbindungskanal 3a gefährden, weil die Masse an den Wänden kleben bliebe und zu Verstopfungen führen würde. Eine flüssige Mischung aus Prozessgut 4 und Transportgut 5 ist ebenfalls nicht rieselffähig und fällt daher nicht in Betracht.

Insbesondere kann das in der Anlage 1 verwendete Transportgut 5a gleich dem Prozessgut 4 sein. In diesem Fall ist das Prozessgut 4 alleine im Verbindungskanal, die Dichtzone bildend. Weiter kann sich das Prozessgut 4 auch nur durch den Feuchtigkeitsgehalt vom Transportgut 5a unterscheiden. So kann ein Nassmaterial mit einer Trockensubstanz vermengt werden, welche dem getrockneten Nassmaterial entspricht. Dadurch wird das Nassmaterial durch die Mischung trockener und somit wird die gewünschte Rieselfähigkeit erreicht, die für den Industrieprozess verlangt wird.

Beispielsweise ist Sand ein rieselfähiges Material, das gasdurchlässig ist: Feuchtigkeit kann aus einem kleinen Sandhaufen entweichen, bis er vollständig getrocknet ist. Zudem ist Sand oder ein ähnliches Granulat mit einer Korngrösse von etwa 0.5-3mm Durchmesser ein geeignetes Transportgut 5a, da es in einer Dichtlänge von bereits weniger als einem Meter für die meisten Prozessbedingungen, insbesondere Druckunterschiede, eine genügende Dichtheit darstellt.

Vorzugsweise umfasst die Anlage 1 eine Trennvorrichtung 8 im zweiten Raum 2b zum Trennen des Transportgutes 5a vom Prozessgut 4. Zusätzlich kann eine Rückführvorrichtung 9 angeordnet sein, zum Rückführen des Transportgutes 5a, das entweder direkt in den ersten Verbindungskanal 3a oder erst in den ersten Raum 2a gebracht wird, von dem es schliesslich wieder in den Verbindungskanal 3 gelangt und mit neuem Prozessgut 4 die Dichtzone bildet.

Wie in Fig. 2 dargestellt kann die Anlage 1 auch einen oder mehrere weitere Räume 2c, 2d mit individuellen Prozessbedingungen umfassen, wobei alle Räume 2a, 2b, 2c, 2d direkt oder indirekt durch entsprechend viele weitere Verbindungskanäle 3b, 3c miteinander verbunden sind. In jedem weiteren Verbindungskanal 3b, 3c bildet entsprechend dem ersten Verbindungskanal 3a jeweils ein Transportgut 5b, 5c zusammen mit dem Prozessgut 4 während dem Prozess jeweils eine rieselfähige Dichtzone 6b, 6c, welche die Aufrechterhaltung der unterschiedlichen Prozessbedingungen, insbesondere Druckunterschiede in den jeweils an den weiteren Verbindungskanal 3b, 3c angrenzenden Räumen 2b, 2c, 2d gewährleistet. In den Verbindungskanälen 3a, 3b, 3c können jeweils identische und/oder verschiedene Fliessgüter 5a, 5b, 5c angeordnet sein. Entsprechend können, wenn alle Fliessgüter 5a, 5b, 5c identisch sind, diese zusammen mit dem Prozessgut 4 alle Verbindungskanäle 3a, 3b, 3c mit dem Prozessgut 4 rieselnd durchlaufen. Dazu können entsprechende Trennvorrichtungen vorhanden sein, um in jedem Raum 2b, 2c, 2d das Prozessgut 4 vom jeweiligen Transportgut 5a, 5b, 5c zu trennen. Zudem können Zuführvorrichtungen 10 angeordnet sein, welche das abgesonderte Transportgut 5a, 5b als nächstes Transportgut 5b, 5c vor dem nächsten Verbindungskanal 3b, 3c wieder mit dem Prozessgut 4 vermengt.

Insbesondere können auch zusätzliche Vorrichtungen oder Zuführvorrichtungen 10 zum Einbringen weiterer Prozessgüter 4' in einem der Räume 2 angeordnet sein, wie in Fig. 2 dargestellt ist. Zudem können die verschiedenen Prozessgüter 4, 4' bereits eine oder mehrere Räume 2 mit entsprechenden Prozessen durchlaufen haben, bevor sie zusammengeführt werden und weitere Räume gemeinsam durchlaufen. Dies ist nicht dargestellt.

In Fig. 3a ist ein mögliches Beispiel eines erfindungsgemässen Verbindungskanals 3a dargestellt, der zwei Räume 2a, 2b verbindet. Der Verbindungskanal 3 umfasst dabei einen senkrecht aufgestellten, beidseitig offenen Zylinder, der auf jeder Seite in einem der Räume 2a, 2b endet, die ansonsten keine direkte Verbindung zueinander aufweisen. Die Räume sind druckdicht voneinander getrennt, wobei der Druckunterschied in den Räumen (2a, 2b) mindestens 0.2 bar, mindestens 0.8 bar oder mindestens 2 bar ist. Entsprechend ist die erforderliche Mindestlänge des Verbindungskanals 3 unterschiedlich lang. Mindestens eine der Räume 2a, 2b muss druckdicht von der Umgebung abgetrennt sein, entsprechend den Anforderungen der Druckdifferenz. Das bedeutet, dass sowohl der Einlass als auch der Auslass für das Prozessgutes 4 und für das Transportgutes 5a im Gebrauch dicht sein muss. Dies kann beides erfindungsgemäss durch einen Verbindungskanal 3 als rieselfähige Dichtzone 6 erreicht werden. Insbesondere können auch die Zuführeinrichtungen im Gebrauch dicht ausgestaltet sein. Falls das Prozessgut 4 und/oder das Transportgut 5a selbst nicht rieselfähig sondern beispielsweise flüssig oder pastös sind, sind andere bekannte, dichte Einlass- und/oder Auslasseinrichtungen aus dem Stand der Technik bekannt.

In Fig. 3a wird das Gemisch mit Prozessgut 4 und Transportgut 5a im Raum 2a kontinuierlich mit einem Transportmittel 7, beispielsweise mit einem Fliessband oder einer Förderschnecke, in den zylindrischen Verbindungskanal 3a gebracht. Im Raum 2b befindet sich, nah aber beabstandet von der Rohröffnung, ein weiteres Transportmittel 7, beispielsweise ein weiteres Fliessband, auf welches Prozessgut 4 und Transportgut 5a beim Prozess aus dem Verbindungskanal 3a rieseln. Dabei ist der Abstand A zwischen dem Transportmittel 7 und der unteren Öffnung des Verbindungskanals 3a so bemessen, dass das Gemisch aus Prozessgut 4 und Transportgut 5a ins Stocken gerät und nicht mehr rieselt, sobald das untere Transportmittel 7 im Raum 2b still steht, wie aus Fig. 3a zu entnehmen ist. Die Laufgeschwindigkeit des Transportmittels 7 bestimmt zusammen mit dem genannten Abstand A somit die Durchflussmenge in der Anlage 1. Der Nachschub in den Verbindungskanal 3a sollte demnach so reguliert werden, dass der Füllstand in diesem stets in einem vorgegebenen Bereich liegt. So ist gewährleistet, dass die vorgesehene Dichtheit zwischen den Räumen 2a und 2b stets den gewünschten Kriterien entspricht.

Das Rieselprinzip entspricht hier dem eines Vogelfutterspenders: Das Vogelfutter stockt in der Schale, solange der Vorrat dort ausreichend gefüllt ist. Sobald die Körner aber weggepickt sind, rieselt es wieder vom Vogelfuttervorrat nach, ohne die Schale jedoch zu überfüllen. Es ist ersichtlich, dass dieses Prinzip weder mit einer pastösen noch mit einer flüssigen Füllung funktionieren würde. Daher ist in der erfindungsgemässen Anlage 1 eine rieselnde Mischung als Füllung in der Dichtzone 6 zwingend.

Zusätzlich muss die Dichtzone eine ausreichende Länge aufweisen, damit die erforderliche Druckdichtigkeit gewährleistet ist. Die erforderliche Länge hängt vom Druckunterschied, dem mittleren Granulat Durchmesser und der Querschnittsfläche des Verbindungskanals 3 ab.

Das genannte Beispiel gemäss Fig. 3a und 3b kann natürlich verallgemeinert werden, ohne an Gültigkeit zu verlieren. So muss der Verbindungskanal 3b nicht zwingend senkrecht aufgestellt sein, er kann auch eine Neigung zur Fallrichtung aufweisen. Zudem muss der Querschnitt des Verbindungskanals 3a nicht rund sein sondern kann jede beliebige Form aufweisen, beispielsweise rechteckig, die Form muss auch nicht konstant sein. Anstelle des nahen Transportmittels 7, das das freie Ausrieseln aus dem Verbindungskanal 3a verhindert, kann auch ein Trichter an der unteren Öffnung des Verbindungskanals 3a angebracht sein, wobei die Einstellung der Trichteröffnung die Menge des Durchflusses regelt. Der Abstand zum Transportmittel muss dann entsprechend eine Mindestgrösse einhalten. Der Vorteil des nahen Transportbandes liegt jedoch darin, dass die Anlage 1 jederzeit gestoppt und wieder angefahren werden kann, ohne eine Vorrichtung zu schliessen und zu öffnen. Ein Trichter würde bei einem Prozessstopp den Verbindungskanal 3a langsam leerlaufen lassen, wenn die Trichteröffnung nicht verschlossen würde.

Zudem kann, wie in Fig. 3b dargestellt, der Verbindungskanal 3a auch von unten gefüllt werden, insbesondere wenn er in einem Winkel zur Fallrichtung angeordnet ist. Die Mischung aus Prozessgut 4 und Transportgut 5a wird dann vorzugsweise mit einem Transportmittel 7, beispielsweise mit einem durchlaufenden Förderband, einer Förderschnecke oder einem Spiralförderer teilweise nach oben befördert, wo es schliesslich aus dem Verbindungskanal 3a herausrieselt. Dies ist insbesondere dann gut möglich, wenn das spezifische Gewicht des Prozessguts 4 höher ist als das des Transportguts 5a, da dann sichergestellt ist, dass kein Prozessgut 4 im oberen Teil des Verbindungskanals 3a stecken bleibt. In diesem Fall würde ein grosser Teil des Transportgutes 5a permanent im Verbindungskanal 3a bleiben und jeweils nur ein kleinerer Teil des Transportgutes 5a das obere Ende des Verbindungskanals 3a erreichen. Somit fliesst das Prozessgut 4 mehrheitlich im Transportgut 5a und weniger mit ihm. Die Druckdichtigkeit in der Dichtzone 6 bleibt aber stets gewährleistet.

Es hat sich gezeigt, dass selbst ein Transportgut 5a, das an sich offene Gaskanäle enthält, genügend abdichten kann und somit eine ausreichende Dichtzone 6 bilden kann, wenn eine entsprechende Füllhöhe und/oder Fülllänge vorgesehen ist.

Das erfindungsgemässe Verfahren ist ein mehrstufiger, kontinuierlicher Industrieprozess, der auf einer erfindungsgemässen Anlage 1 ausgeführt wird. Dabei wird ein kontinuierliches Prozessgut 4 in den ersten Raum 2a mit ersten Prozessbedingungen eingebracht, wo es einem ersten Prozess unterliegt. Das Prozessgut 4 durchläuft anschliessend in oder mit dem Transportgut 5a den ersten Verbindungskanal 3a und gelangt in den zweiten Raum 2b mit zweiten Prozessbedingungen und insbesondere mit anderen Druckverhältnissen als im Raum 2a, wo es einem zweiten Prozess unterliegt. Aus diesem wird es schliesslich entnommen, beispielsweise indem es in einen weiteren Verbindungskanal 3b eingeführt wird. Das Transportgut 5a bildet zusammen mit dem Prozessgut 4 zu jeder Zeit eine rieselnde Dichtzone 6 im Verbindungskanal 3a, welche die Aufrechterhaltung der unterschiedlichen Prozessbedingungen und insbesondere verschiedene Drucke in den beiden Räumen 2a, 2b gewährleistet.

Insbesondere kann das Prozessgut 4 anschliessend je einen oder je mehrere weitere Verbindungskanäle 3b, 3c und Räume 2c, 2d mit eigenen Prozessbedingungen alternierend durchlaufen. Dabei bildet in jedem weiteren Verbindungskanal 3b, 3c jeweils ein Transportgut 5b, 5c zusammen mit dem Prozessgut 4 eine rieselnde Dichtzone 6b, 6c, welche die Aufrechterhaltung der unterschiedlichen Prozessbedingungen und Druckunterschiede in den jeweils an den weiteren Verbindungskanal 3b, 3c angrenzenden Räumen 2b, 2c, 2d gewährleistet.

Erfindungsgemäss ist das Prozessgut (4) in den Räumen 2a, 2b, 2c, 2 zwei oder mehr Prozessen unterworfen. Ein Prozess kann insbesondere eine Trocknung, eine Befeuchtung, eine Kondensation, eine Destillation, ein Einfärben, ein Bespritzen, eine Bestrahlung, eine Gaszusammensetzung, eine chemische Reaktion, eine Inertisierung von Stoffen, eine Erwärmung, eine Kühlung, eine Adsorption, eine Rezeption, und/oder eine Mischung oder Entmischung sein.

### Bezugszeichenliste

- 1: Anlage
- 2 2a, 2b, 2c, 2d: Raum
- 3 3a, 3b, 3c: Verbindungskanal
- 4: Prozessgut
- 5 5a, 5b, 5c: Transportgut
- 6: Dichtzone
- 7: Transportmittel
- 8: Trennvorrichtung
- 9: Rückführvorrichtung
- 10: Zuführvorrichtung

- A: Abstand

## Patentansprüche

1. Anlage zur Durchführung eines kontinuierlichen, mehrstufigen Industrieprozesses,
umfassend mindestens einen ersten Raum (2a) und einen zweiten Raum (2b), wobei diese zwei Räumen so ausgestattet sind dass in diesen Räumen (2a, 2b) während des Prozessverlaufs verschiedene Prozessbedingungen und verschiedene Drucke vorherrschen, wobei diese zwei Räume (2a, 2b) durch einen ersten Verbindungskanal (3a) miteinander verbunden sind, und wobei ein Prozessgut (4) bei einem Prozessablauf den ersten Raum (2a), den ersten Verbindungskanal (3a) und den zweiten Raum (2b) nacheinander durchlaufen kann, **dadurch gekennzeichnet, dass** ein Transportgut (5a) im ersten Verbindungskanal (3a) vorgesehen ist, in welchem oder mit welchem bei einem Prozessablauf das Prozessgut (4) den ersten Verbindungskanal (3a) durchlaufen kann, wobei das Verbindungskanal so ausgestattet ist das während des Prozessverlaufs das Transportgut (5a) zusammen mit dem Prozessgut (4) eine rieselfähige Dichtzone (6) im Verbindungskanal (3a) bildet, welche die Aufrechterhaltung von unterschiedlichen Prozessbedingungen und Drucken in den beiden Räumen (2a, 2b) gewährleistet.

2. Anlage nach Anspruch 1, **dadurch gekennzeichnet, dass** der Durchgang zwischen den beiden Räumen (2a, 2b) schleusenfrei ist.

3. Anlage nach Anspruch 1 oder 2, **dadurch gekennzeichnet, dass** ein oder mehrere Transportmittel (7) vorgesehen sind, welche den Durchlauf des Prozessguts (4) gewährleisten.

4. Anlage nach Anspruch 3, **dadurch gekennzeichnet, dass** mindestens eines der Transportmittel (7) eine Schnecke, ein Transportband, eine Förderschnecke, eine Rieselanlage und/oder eine Pumpe umfasst.

5. Anlage nach einem der vorhergehenden Ansprüche, **dadurch gekennzeichnet, dass** der erste Raum (2a) und der zweite Raum (2b) abgesehen vom Verbindungskanal (3a) keine direkte Verbindung zueinander aufweisen und druckdicht voneinander getrennt sind, wobei der Druckunterschied in den Räumen (2a, 2b) mindestens 0.2 bar, mindestens 0.8 bar oder mindestens 2 bar ist.

6. Anlage nach einem der vorhergehenden Ansprüche, **dadurch gekennzeichnet, dass** das Prozessgut (4) ein Schüttgut, eine pastöse Masse oder eine Flüssigkeit ist.

7. Anlage nach einem der vorhergehenden Ansprüche, **gekennzeichnet durch** eine Trennvorrichtung (8) im zweiten Raum (2b) zum Trennen des Transportgutes (5a) vom

8. Anlage nach Anspruch 7, **gekennzeichnet durch** eine Rückführvorrichtung (9) zum Rückführen des Transportgutes (5a) in den ersten Verbindungskanal (3a).

9. Anlage nach einem der Ansprüche 1 bis 5, **dadurch gekennzeichnet, dass** das Transportgut (5a) gleich dem Prozessgut (4) ist, wobei diese rieselfähig sind.

10. Anlage nach einem der vorhergehenden Ansprüche, **dadurch gekennzeichnet, dass** sich die Prozessbedingungen in den beiden Räumen (2a, 2b) abgesehen von den verschiedenen Drucken auch in deren Temperatur, deren Feuchtigkeitsgehalt, deren Gaszusammensetzung und/oder durch die Strahlenbelastung in den Räumen unterscheiden.

11. Anlage nach einem der vorhergehenden Ansprüche, umfassend einen oder mehrere weitere Räume (2c, 2d) mit individuellen Prozessbedingungen und mit verschiedenen Drucken, wobei alle Räume (2a, 2b, 2c, 2d) direkt oder indirekt durch entsprechend viele weitere Verbindungskanäle (3b, 3c) miteinander verbunden sind, wobei in jedem weiteren Verbindungskanal (3b, 3c) entsprechend dem ersten Verbindungskanal (3) jeweils ein Transportgut (5b, 5c) zusammen mit dem Prozessgut (4) eine rieselfähige Dichtzone (6b, 6c) bildet, welche die Aufrechterhaltung von unterschiedlichen Prozessbedingungen und Drucken in den jeweils an den weiteren Verbindungskanal (3b, 3c) angrenzenden Räumen (2b, 2c, 2d) gewährleistet.

12. Mehrstufiger, kontinuierlicher Industrieprozess unter Verwendung einer Anlage (1) nach einem der vorhergehenden Ansprüche, wobei Prozessgut (4) in den ersten Raum (2a) mit ersten Prozessbedingungen und Drucken eingebracht wird, wo es einem ersten Prozess unterliegt, das Prozessgut (4) anschliessend in oder mit dem Transportgut (5a) den ersten Verbindungskanal (3a) durchläuft und in den zweiten Raum (2b) mit zweiten Prozessbedingungen gelangt, wo es einem zweiten Prozess unterliegt, aus dem es entnommen wird, wobei das Transportgut (5a) zusammen mit dem Prozessgut (4) eine rieselnde Dichtzone (6) im Verbindungskanal (3a) bildet, welche die Aufrechterhaltung der unterschiedlichen Prozessbedingungen und Drucken in den beiden Räumen (2a, 2b) gewährleistet.

13. Prozess nach Anspruch 12, **dadurch gekennzeichnet, dass** das Prozessgut (4) anschliessend je einen oder je mehrere weitere Verbindungskanäle (3b, 3c) und Räume (2c, 2d) mit eigenen Prozessbedingungen und verschiedenen Drucken alternierend durchläuft, wobei in jedem weiteren Verbindungskanal (3b, 3c) jeweils ein Transportgut (5b, 5c) zusammen mit dem Prozessgut (4) eine rieselnde Dichtzone (6b, 6c) bildet, welche die Aufrechterhaltung der unterschiedlichen Prozessbedingungen und Drucken in den jeweils an den weiteren Verbindungskanal (3b, 3c) angrenzenden Räumen (2b, 2c, 2d) gewährleistet.

14. Prozess nach Anspruch 12 oder 13, **dadurch gekennzeichnet, dass** das Prozessgut (4) in den Räumen (2a, 2b, 2c, 2d) zwei oder mehr Prozessen unterworfen ist.

15. Prozess nach Anspruch 12 bis 14, **dadurch gekennzeichnet, dass** einer oder mehrere der Prozesse eine Trocknung, eine Befeuchtung, eine Kondensation, eine Destillation, ein Einfärben, ein Bespritzen, eine Bestrahlung, eine Gaszusammensetzung, eine chemische Reaktion, eine Inertisierung von Stoffen, eine Erwärmung, eine Kühlung, eine Adsorption, eine Rezeption, eine Mischung und/oder eine Entmischung ist.

## Claims

1. An installation for carrying out a continuous multi-stage industrial process, comprising at least one first space (2a) and one second space (2b), wherein these two spaces are equipped such that different process conditions and different pressures prevail in these spaces (2a, 2b) during the course of the process, wherein these two spaces (2a, 2b) are connected to one another through a first connecting channel (3a), and wherein a process material (4) can pass successively through the first space (2a), the first connecting channel (3a) and the second space (2b), **characterized in that** a transported material (5a) is provided in the first connecting channel (3a) in which or with which the process material (4) can pass through the first connecting channel (3a) in a process sequence, wherein the connecting channel is equipped such that the transported material (5a) together with the process material (4) forms a free-flowing sealing zone (6) in the connecting channel (3a) during the course of the process, which sealing zone ensures that different process conditions and pressures are maintained in the two spaces (2a, 2b).

2. The installation according to claim 1, **characterized in that** the passage through the two spaces (2a, 2b) is free of any airlock.

3. The installation according to claim 1 or 2, **characterized in that** one or more transport means (7) are provided, which ensure the passage of the process material (4).

4. The installation according to claim 3, **characterized in that** at least one of the transport means (7) comprises a worm gear, a conveyor belt, a conveyor worm gear, a trickle installation and/or a pump.

5. The installation according to any one of the preceding claims, **characterized in that** the first space (2a) and the second space (2b) do not have any direct connection to one another apart from the connecting channel (3a) and are separated from one another in a pressure-tight manner, wherein the pressure difference in the spaces (2a, 2b) is at least 0.2 bar, at least 0.8 bar or at least 2 bar.

6. The installation according to any one of the preceding claims, **characterized in that** the process material (4) is a bulk material, a pasty material or a liquid.

7. The installation according to any one of the preceding claims, **characterized by** a separation device (8) in the second space (2b) for separating the transported material (5a) from the process material (4).

8. The installation according to claim 7, **characterized by** a return device (9) for returning the transported material (5a) back into the first connecting channel (3a) .

9. The installation according to any one of claims 1 to 5, **characterized in that** the transported material (5a) is the same as the process material (4), wherein both of them are free-flowing.

10. The installation according to any one of the preceding claims, **characterized in that** apart from the different pressures, the process conditions in the two spaces (2a, 2b) are also different with regard to their temperature, their moisture content, their gas composition and/or the radiation burden in the spaces.

11. The installation according to any one of the preceding claims, comprising one or more further spaces (2c, 2d) with individual process conditions and with different pressures, wherein all the spaces (2a, 2b, 2c, 2d) are directly or indirectly connected to one another through a corresponding number of further connecting channels (3b, 3c), wherein in each further connecting channel (3b, 3c) according to the first connecting channel (3) a transported material (5b, 5c) together with the process material (4) forms in each case a free-flowing sealing zone (6b, 6c) which ensures that the different process conditions and pressures are maintained in each of the spaces (2b, 2c, 2d) adjacent to the further connecting channels (3b, 3c).

12. A multi-stage continuous industrial process using an installation (1) according to any one of the preceding claims, wherein the process material (4) is introduced into the first space (2a) with first process conditions and pressures where it is subjected to a first process, the process material (4) subsequently passing through the first connecting channel (3a) in or with the transported material (5a) and entering into the second space (2b) with the second process conditions where it is subjected to a second process and from which it is removed, wherein the transported material (5a) together with the process material (4) forms a free-flowing sealing zone (6) in the connecting channel (3a), which sealing zone ensures that the different process conditions and pressures are maintained in the two spaces (2a, 2b).

13. The process according to claim 12, **characterized in that** the process material (4) subsequently passes alternately through one or more further connecting channels (3b, 3c) and spaces (2c, 2d) with their own process conditions and different pressures, wherein in each further connecting channel (3b, 3c) a transported material (5b, 5c) together with the process material (4) forms in each case a free-flowing sealing zone (6b, 6c) which ensures that the different process conditions and pressures are maintained in each of the spaces (2b, 2c, 2d) adjacent to the further connecting channels (3b, 3c).

14. The process according to claim 12 or 13, **characterized in that** the process material (4) in the spaces (2a, 2b, 2c, 2d) is subjected to two or more processes.

15. The process according to claims 12 to 14, **characterized in that** one or more of the processes is a drying, a moistening, a condensation, a distillation, a pigmentation, a spraying, an irradiation, a gas composition, a chemical reaction, an inertization of substances, a heating, a cooling, an adsorption, a reception, a mixing and/or a separation.

## Revendications

1. Installation, destinée à réaliser un procédé industriel en plusieurs étapes, comprenant au moins un premier espace (2a) et un deuxième espace (2b), lesdits deux espaces étant équipés de telle sorte que dans lesdits espaces (2a, 2b), pendant le déroulement du procédé, il règne différentes conditions de procédé et différentes pressions, lesdits deux espaces (2a, 2b) étant reliés l'un à l'autre par un premier canal de liaison (3a), et, lors d'un déroulement du procédé, un produit de procédé (4) étant susceptible de traverser successivement le premier espace (2a), le premier canal de liaison (3a) et le deuxième espace (2b), **caractérisée** en ce dans le premier canal de liaison (3a) est prévu un produit transporté (5a), dans lequel ou à l'aide duquel, lors d'un déroulement du procédé, le produit de procédé (4) est susceptible de traverser le premier canal de liaison (3a), le canal de liaison étant équipé de telle sorte que pendant le déroulement du procédé, le produit transporté (5a) forme conjointement avec le produit de procédé (4) une zone d'étanchéité (6) coulante dans le canal de liaison (3a), laquelle assure le maintien de différentes conditions de procédé et pressions dans les deux espaces (2a, 2b).

2. Installation selon la revendication 1, **caractérisée en ce que** le passage entre les deux espaces (2a, 2b) est dépourvu de sas.

3. Installation selon la revendication 1 ou 2, **caractérisée en ce qu'**il est prévu un ou plusieurs moyens de transport (7), lesquels assurent le passage du produit de procédé (4).

4. Installation selon la revendication 3, **caractérisée en ce qu'**au moins l'un des moyens de transport (7) comprend une vis sans fin, une bande de transport, une vis transporteuse, une installation d'irrigation et/ou une pompe.

5. Installation selon l'une quelconque des revendications précédentes, **caractérisée en ce qu'**à l'exception du canal de liaison (3a), le premier espace (2a) et le deuxième espace (2b) ne comportent aucune liaison réciproque directe et sont séparés l'un de l'autre de manière étanche à la pression, la pression différentielle dans les espaces (2a, 2b) étant d'au moins 0.2 bar, d'au moins 0.8 bar ou d'au moins 2 bar.

6. Installation selon l'une quelconque des revendications précédentes, **caractérisée en ce que** le produit de procédé (4) est un produit en vrac, une masse pâteuse ou un liquide.

7. Installation selon l'une quelconque des revendications précédentes, **caractérisé par** un dispositif séparateur (8) dans le deuxième espace (2b), destiné à séparer le produit transporté (5a) du produit de procédé (4).

8. Installation selon la revendication 7, **caractérisé par** un dispositif de recyclage (9), destiné à recycler le produit transporté (5a) dans le premier canal de liaison (3a).

9. Installation selon l'une quelconque des revendications 1 à 5, **caractérisée en ce que** le produit transporté (5a) est identique au produit de procédé (4), celui-ci étant coulant.

10. Installation selon l'une quelconque des revendications précédentes, **caractérisée en ce qu'**à l'exception des différentes pressions, les conditions du procédé se différencient dans les deux espaces (2a, 2b) également au niveau de leur température, de leur taux d'humidité, de leur composition gazeuse et/ou de l'exposition aux rayons dans les espaces.

11. Installation selon l'une quelconque des revendications précédentes, comprenant un ou plusieurs espaces (2c, 2d) supplémentaires, assortis de conditions de procédé individuelles et de différentes pression, tous les espaces (2a, 2b, 2c, 2d) étant directement ou indirectement reliés les uns aux autres par une quantité correspondante de canaux de liaison (3b, 3c) supplémentaires, dans chaque canal de liaison (3b, 3c) supplémentaire, en correspondance avec le premier canal de liaison (3), respectivement un produit transporté (5b, 5c) formant conjointement avec le produit de procédé (4) une zone d'étanchéité (6b, 6c) coulante, laquelle assure le maintien de différentes conditions de procédé et pressions dans les espaces (2b, 2c, 2d) respectivement adjacents au canal de liaison (3b, 3c) supplémentaire.

12. Procédé industriel continu en plusieurs étapes, utilisant une installation (1) selon l'une quelconque des revendications précédentes, du produit de procédé (4) étant introduit dans le premier espace (2a), assorti de premières conditions de procédé et pressions, dans lequel il est soumis à un premier procédé, le produit de procédé (4) traversant par la suite dans ou avec le produit transporté (5a) le premier canal de liaison (3a) et arrivant dans le deuxième espace (2b), assorti de deuxièmes conditions de procédé, dans lequel il est soumis à un deuxième procédé, à partir duquel il est retiré, le produit transporté (5a) formant conjointement avec le produit de procédé (4) une zone d'étanchéité (6) coulante dans le canal de liaison (3a), laquelle assure le maintien de différentes conditions de procédé et pressions dans les deux espaces (2a, 2b).

13. Procédé selon la revendication 12, **caractérisé en ce que** le produit de procédé (4) traverse ensuite en alternance chaque fois un ou chaque fois plusieurs canaux de liaison (3b, 3c) et espaces (2c, 2d) supplémentaires, assortis de propres conditions de procédé et de différentes pressions, dans chaque canal de liaison (3b, 3c) supplémentaire, respectivement un produit transporté (5b, 5c) formant conjointement avec le produit de procédé (4) une zone d'étanchéité (6b, 6c) coulante, laquelle assure le maintien des différentes conditions de processus et pressions dans les espaces (2b, 2c, 2d) respectivement adjacents au canal de liaison (3b, 3c) supplémentaire.

14. Procédé selon la revendication 12 ou 13, **caractérisé en ce que** le produit de procédé (4) est soumis dans les espaces (2a, 2b, 2c, 2d) à deux ou à plusieurs procédés.

15. Procédé selon la revendication 12 à 14, **caractérisé en ce qu'**un ou plusieurs des procédés est un séchage, une humidification, une condensation, une distillation, une coloration, une aspersion, une irradiation, une composition gazeuse, une réaction chimique, un inertage de substances, un échauffement, un refroidissement, une adsorption, une réception, un mélange et/ou une ségrégation.
